# EUROPEAN PATENT APPLICATION

(11) **EP 4 693 044 A1**
(43) Date of publication of application: **11.02.2026**
(21) Application number: 24806075.8
(22) Date of filing: 16.01.2024
(51) Int. Cl.: G06F 9/50

(54) **MEMORY MANAGEMENT METHOD, ELECTRONIC DEVICE, AND STORAGE MEDIUM**

(30) Priority: 17.05.2023 CN 202310554422
(71) Applicant: Huawei Technologies Co., Ltd., Shenzhen, Guangdong 518129 (CN)
(72) Inventor: WANG, Shiwei, Shenzhen, Guangdong 518129 (CN); LI, Haicheng, Shenzhen, Guangdong 518129 (CN); ZHAN, Yang, Shenzhen, Guangdong 518129 (CN)
(74) Representative: Goddar, Heinz J.
(86) International application number: PCT/CN2024/072509
(87) International publication number: WO 2024/234711

(57) **Abstract**

This application provides a memory management method, an electronic device, and a storage medium. The method includes: allocating a virtual memory in response to a received memory allocation request; creating a virtual memory region for the allocated virtual memory, and binding the virtual memory region to a target backend, where the backend indicates a type of a data source; determining a physical page type based on the target backend, where the physical page type includes a common-physical-page type and a huge-physical-page type; and allocating or loading a physical page based on the physical page type, and establishing a first mapping relationship between the virtual memory region and the allocated physical page or the loaded physical page. The method provided in this application helps improve memory performance and reduce memory overheads.

## Description

This application claims priority to Chinese Patent Application No. 202310554422.2, filed with the China National Intellectual Property Administration on May 17, 2023 and entitled "MEMORY MANAGEMENT METHOD, ELECTRONIC DEVICE, AND STORAGE MEDIUM", which is incorporated herein by reference in its entirety.

### TECHNICAL FIELD

This application relates to the field of computer technologies, and in particular, to a memory management method, an electronic device, and a storage medium.

### BACKGROUND

With continuous development of computer hardware technologies, to meet a requirement of complex computing processing, supporting an increasingly large memory has become an important trend of computer memory management.

In a conventional page management technology, because a page granularity is small, excessive page fault processing is caused in a large-scale data processing service. In addition, the large-scale data processing service relates to a large range of memory access, and therefore use of the conventional page management technology may result in a reduced page table cache hit rate. Consequently, overall service performance of a system is limited.

In a huge-page management technology, memory management can be performed at a larger page granularity in an operating system, and a page fault processing frequency of the system can be reduced in a large-scale data processing service, to improve overall performance of the system. However, a current huge-page management technology is highly coupled to a hardware memory management unit. This limits a selectable granularity of a huge page, resulting in high memory overheads. In addition, when the huge-page management technology is used for an operating system that supports only the conventional page management technology, a compatibility problem or the like occurs.

### SUMMARY

This application provides a memory management method, an electronic device, and a storage medium, to help improve memory performance and reduce memory overheads.

According to a first aspect, this application provides a memory management method, including: allocating a virtual memory in response to a received memory allocation request; creating a virtual memory region for the allocated virtual memory, and binding the virtual memory region to a target backend, where the backend indicates a type of a data source; determining a physical page type based on the target backend, where the physical page type includes a common-physical-page type and a huge-physical-page type; and allocating or loading a physical page based on the physical page type, and establishing a first mapping relationship between the virtual memory region and the allocated physical page or the loaded physical page.

In this application, during memory allocation, different types of physical pages are determined based on different backends, so that the allocated physical pages can better adapt to a currently required memory, thereby helping improve memory performance and reduce memory overheads.

In a possible implementation, after the binding the virtual memory region to a target backend, the method further includes: searching for a corresponding target virtual memory region based on a page fault address in response to detecting a page fault; and the target virtual memory region determines the target backend.

In a possible implementation, after the binding the virtual memory region to a target backend, the method further includes: searching for a corresponding target virtual memory region based on an address of a mapping establishment request in response to receiving the mapping establishment request; and determining the target backend based on the target virtual memory region.

In a possible implementation, the determining a physical page type based on the target backend includes: determining a target intersection set between a huge-page window and a target virtual memory region, where the huge-page window indicates a memory space that can be accommodated by a huge physical page; and if the target intersection set is equal to the memory space corresponding to the huge physical page, determining that the physical page type is the huge-physical-page type; if the target intersection set is less than the memory space corresponding to the huge physical page, determining that the physical page type is the common-physical-page type; or if the target intersection set includes the allocated physical page or the loaded physical page, determining that the physical page type is the common-physical-page type.

In a possible implementation, after allocating or loading a physical page based on the physical page type, and establishing a first mapping relationship between the target virtual memory region and the allocated physical page or the loaded physical page, the method further includes: updating one or more pieces of the following information: related information, the first mapping relationship, and physical page information of the target virtual memory region in response to a received update request.

In a possible implementation, the allocated physical page or the loaded physical page is the huge physical page, and the establishing a first mapping relationship between the target virtual memory region and the allocated physical page or the loaded physical page includes: mapping the target virtual memory region to a partial area in the allocated physical page or a partial area in the loaded physical page; or mapping the target virtual memory region to an entire area in the allocated physical page or an entire area in the loaded physical page.

In a possible implementation, after allocating or loading a physical page based on the physical page type, and establishing a first mapping relationship between the target virtual memory region and the allocated physical page or the loaded physical page, the method further includes: in response to detecting a reclamation request, selecting a reclaimable physical page from the allocated physical page or the loaded physical page, and removing a first mapping relationship between the virtual memory region and the reclaimable physical page, where the reclaimable physical page is a common physical page or a huge physical page.

In a possible implementation, the reclaimable physical page is the huge physical page, and the virtual memory region is mapped to a partial area in the reclaimable physical page, or the virtual memory region is mapped to all areas in the reclaimable physical page.

In a possible implementation, the reclaimable physical page is the huge physical page, and the removing a first mapping relationship between the virtual memory region and the reclaimable physical page includes: finding a virtual memory region corresponding to the reclaimable physical page based on a second mapping relationship, where the second mapping relationship is a mapping relationship between one physical page and one or more virtual memory regions; and removing a first mapping relationship between the virtual memory region corresponding to the reclaimable physical page and the reclaimable physical page.

According to a second aspect, this application provides a memory management apparatus, including one or more functional modules. The one or more functional modules are configured to implement the memory management method according to the first aspect.

According to a third aspect, this application provides an electronic device, including a processor and a memory. The memory is configured to store a computer program. The processor is configured to run the computer program to implement the memory management method according to the first aspect.

According to a fourth aspect, this application provides a computer-readable storage medium. The computer-readable storage medium stores a computer program. When the computer program is run on a computer, the computer is enabled to perform the memory management method according to the first aspect.

According to a fifth aspect, this application provides a computer program. When the computer program is run on a processor of an electronic device, the electronic device is enabled to perform the memory management method according to the first aspect.

In a possible design, some or all of programs in the fifth aspect may be stored in a storage medium encapsulated with a processor, or some or all of programs may be stored in a memory that is not encapsulated with a processor.

### BRIEF DESCRIPTION OF DRAWINGS

FIG. 1 is a diagram of a system architecture according to an embodiment of this application;
FIG. 2 is a schematic flowchart of an embodiment of a memory management method according to this application;
FIG. 3 is a schematic flowchart of another embodiment of a memory management method according to this application;
FIG. 4a to FIG. 4c are diagrams of page fault scenarios according to embodiments of this application;
FIG. 5 is a schematic flowchart of still another embodiment of a memory management method according to this application;
FIG. 6 is a diagram of split effect of a huge physical page according to an embodiment of this application;
FIG. 7 is a diagram of a structure of a memory management apparatus according to an embodiment of this application; and
FIG. 8 is a diagram of a structure of an electronic device according to an embodiment of this application.

### DESCRIPTION OF EMBODIMENTS

In embodiments of this application, unless otherwise specified, the character "/" indicates an "or" relationship between associated objects. For example, A/B may indicate A or B. The term "and/or" describes an association relationship between associated objects, and indicates that three relationships may exist. For example, A and/or B may indicate the following three cases: Only A exists, both A and B exist, and only B exists.

It should be noted that, in embodiments of this application, the terms such as "first" and "second" are merely intended for distinction in description, and shall not be understood as an indication or implication of relative importance or an implicit indication of a quantity of indicated technical features, or an indication or implication of a sequence.

In embodiments of this application, "at least one" means one or more, and "a plurality of" means two or more. In addition, "at least one of the following items (pieces)" or a similar expression thereof indicates any combination of these items, including a single item (piece) or any combination of a plurality of items (pieces). For example, at least one item (piece) of A, B, or C may indicate A, B, C, A and B, A and C, B and C, or A, B, and C. A, B, and C each may be an element, or may be a set that includes one or more elements.

In embodiments of this application, "example", "in some embodiments", "in another embodiment", or the like indicate giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "relevant (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that, when "equal to" is used together with "greater than", "equal to" shall not be used together with "less than"; or when "equal to" is used together with "less than", "equal to" shall not be used together with "greater than".

Some terms in embodiments of this application are explained and described below, to facilitate understanding of a person skilled in the art.
1. Virtual address space Vspace. The virtual address space in this application is a virtual memory address space corresponding to a user process in a computer operating system. The virtual address space is used to manage a memory resource of the user process, and a page table mapping is established between a virtual address and a physical address that are allocated to the user process, to implement memory access.
2. Page table. In this application, the page table is a data structure table for storing a mapping relationship between a user virtual memory and a physical address, and a virtual address space of each user process corresponds to one piece of page table data.
3. Memory mapping. The memory mapping in this application is a mapping relationship between a virtual address and a physical address of an application process.
4. Defragmentation. Defragmentation in this application is a technology of combining scattered physical pages into continuous physical pages.

With continuous development of computer hardware technologies, to meet a requirement of complex computing processing, supporting an increasingly large memory has become an important trend of computer memory management.

In a conventional page management technology, because a page granularity is small, excessive page fault processing is caused in a large-scale data processing service. In addition, the large-scale data processing service relates to a large range of memory access, and therefore use of the conventional page management technology may result in a reduced page table cache hit rate. Consequently, overall service performance of a system is limited.

In a huge-page management technology, memory management can be performed at a larger page granularity in an operating system, and a page fault processing frequency of the system can be reduced in a large-scale data processing service, to improve overall performance of the system. However, a current huge-page management technology is highly coupled to a hardware memory management unit. This limits a selectable granularity of a huge page, resulting in high memory overheads. In addition, when the huge-page management technology is used for an operating system that supports only the conventional page management technology, a compatibility problem or the like occurs.

In view of the foregoing problem, embodiments of this application provide a memory management method.

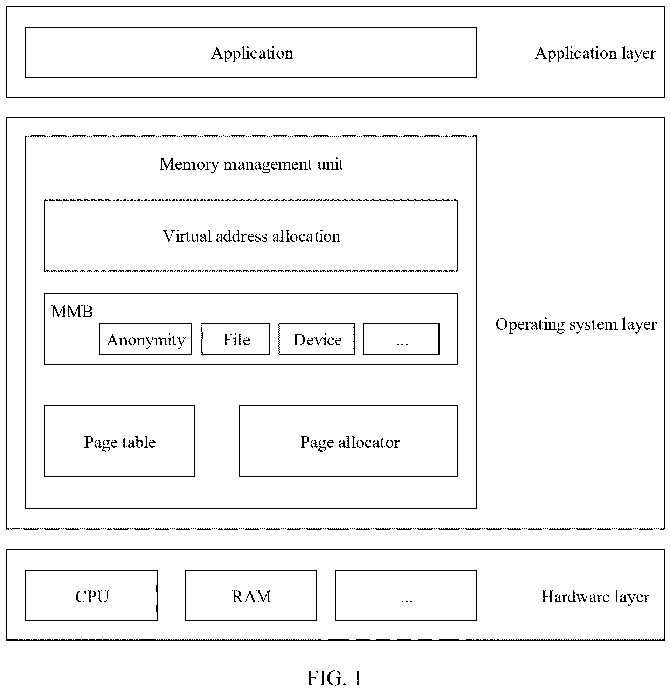

The memory management method provided in embodiments of this application is described with reference to FIG. 1 to FIG. 3, FIG. 4a to FIG. 4c, and FIG. 5.

FIG. 1 is a diagram of a system architecture according to an embodiment of this application. As shown in FIG. 1, the system architecture includes an application layer, an operating system layer, and a hardware layer.

The application layer may include an application. The application may be a system application. For example, the system application may be a driver program. Alternatively, the application may be a third-party application. This is not specifically limited in embodiments of this application.

The operating system layer may include a memory management unit (Memory Management Unit, MMU). The memory management unit may include a virtual address allocation module, a memory mapping backend (Memory Mapping Backend, MMB) module, a page table, and a page allocator. The virtual address allocation module is configured to allocate a segment of continuous virtual memory regions (Vregions) from a virtual address space (Vspace), and the segment of continuous virtual memory regions (Vregions) may be indicated by using a virtual address. An MMB may include a plurality of backend instances. For example, the backend instances may include an anonymity instance, a file instance, a device instance, a sharing instance, and the like. A backend indicates a type of a data source. For example, backends may include an anonymity-class backend, a file-class backend, a device-class backend, a sharing-class backend, and the like.

The page table is a data structure table for managing a mapping relationship between a user virtual memory and a physical address.

The page allocator is configured to allocate a physical page corresponding to a virtual address.

It may be understood that in a conventional technology, the page allocator has a coupling relationship with hardware, that is, a page description is shared between the page table and the page allocator. For example, the page allocator allocates a physical page based on a 4 K page granularity, and a mapping relationship between a virtual address and a physical address in the page table is also mapped based on a 4 K page table granularity. Consequently, flexibility of physical page allocation is low.

In this embodiment of this application, a page description of the page table is independent of a page description of the page allocator. Therefore, granularities of the page table and the page allocator can be kept independent of each other, and there is no coupling relationship between the page table and the page allocator, thereby improving flexibility of physical page allocation and improving memory allocation efficiency. For example, the page allocator may allocate a physical page based on a 64 K page granularity, and a mapping relationship between a virtual address and a physical address in the page table may be mapped based on a 4 K page table granularity.

The hardware layer may include hardware such as a central processing unit (Central Processing Unit, CPU) and a random access memory (Random Access Memory, RAM).

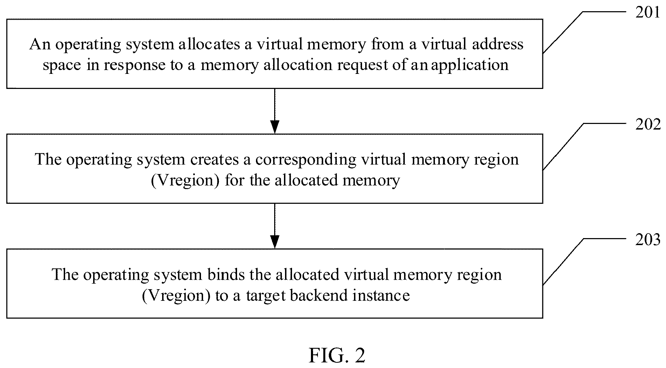

FIG. 2 is a schematic flowchart of an embodiment of the memory management method according to this application. The method specifically includes the following steps.

Step 201: An operating system allocates a virtual memory from a virtual address space in response to a memory allocation request of an application.

Specifically, the application may initiate the memory allocation request, where the memory allocation request is used to request memory allocation. The operating system may allocate the virtual memory from the virtual address space (Vspace) in response to the memory allocation request of the application.

Step 202: The operating system creates a corresponding virtual memory region (Vregion) for the allocated memory.

Specifically, after allocating the virtual memory from the virtual address space (Vspace), the operating system may create the corresponding virtual memory region (Vregion) for the allocated virtual memory. It may be understood that the virtual memory region (Vregion) may include related information such as region information, an access permission, and a reclaimable attribute. The region information may include information such as a start address and an end address of the virtual memory region (Vregion). The access permission is a permission for accessing a physical memory corresponding to the virtual memory region (Vregion). For example, the access permission may include permissions such as read, write, and read&write permissions. This is not specifically limited in embodiments of this application. The reclaimable attribute indicates whether the physical memory corresponding to the virtual memory region (Vregion) is reclaimable. For example, when memory resources are insufficient, the allocated physical memory may be reclaimed. However, this does not constitute a limitation on embodiments of this application. In some embodiments, the virtual memory region (Vregion) may further include other information.

Step 203: The operating system binds the allocated virtual memory region (Vregion) to a target backend instance.

Specifically, after creating the virtual memory region (Vregion), the operating system may bind the created virtual memory region (Vregion) to the target backend instance based on a preset mapping relationship.

A target backend may be obtained by searching the preset mapping relationship, and the preset mapping relationship may be a mapping relationship between a request type and a backend instance. It may be understood that, after receiving the memory allocation request, the operating system may obtain a request type of the memory allocation request, and therefore may search the preset mapping relationship based on the request type of the memory allocation request, to obtain the corresponding backend instance.

It may be understood that, after the virtual memory region (Vregion) is bound to the target backend instance, the physical memory may be allocated, and a first mapping relationship between the virtual memory region (Vregion) and the required physical memory may be established, so that access to the physical memory can be implemented by using the virtual memory space (Vregion). For a specific process of allocating the physical memory and establishing the first mapping relationship between the virtual memory region (Vregion) and the required physical memory, refer to subsequent embodiments. Details are not described herein again.

In this embodiment of this application, the virtual memory region (Vregion) is allocated based on different types of memory allocation requests, the virtual memory region (Vregion) is bound to the backend instance, and the first mapping relationship between the required physical memory and the virtual memory region (Vregion) is established, so that the application can access the corresponding physical memory by using the virtual memory region (Vregion) based on the first mapping relationship.

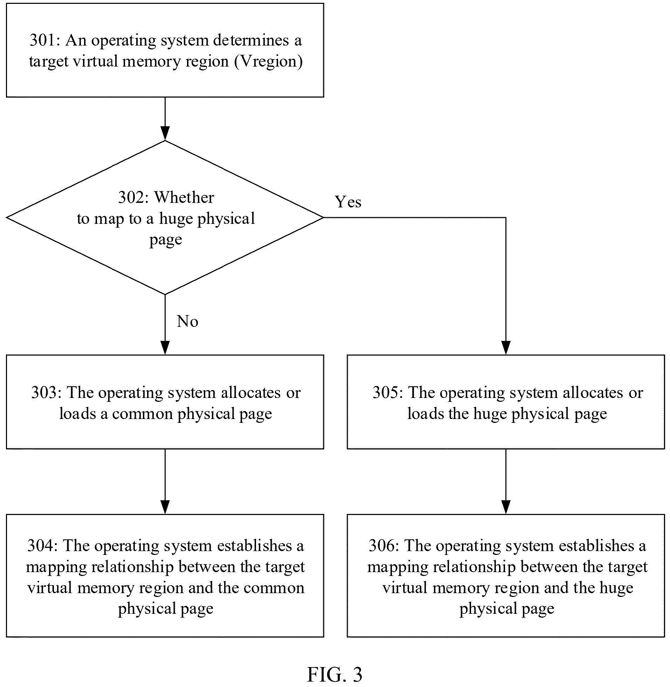

Then, with reference to FIG. 3, an example of allocating the physical memory and establishing a first mapping relationship between the virtual memory and the physical memory is described.

It may be understood that, after allocation of the physical memory is completed and the first mapping relationship between the virtual memory and the physical memory is established, it may be considered that memory allocation for the application is completed, and in a subsequent running process of the application, the physical memory may be accessed by using the virtual address.

FIG. 3 is a schematic flowchart of another embodiment of the memory management method according to this application. The method specifically includes the following steps:
Step 301: An operating system determines a target virtual memory region (Vregion).

In some optional embodiments, after an allocated virtual memory region (Vregion) is bound to a target backend instance, physical page allocation may be actively performed. For example, the operating system may use the allocated virtual memory region (Vregion) as the target virtual memory region (Vregion), and step 302 is performed.

In some optional embodiments, after an allocated virtual memory region (Vregion) is bound to a target backend instance, physical page allocation may be further performed after a mapping establishment request is received. For example, after being allocated to the virtual memory region, an application may further actively initiate the mapping establishment request, to request allocation of a corresponding physical memory. The operating system may search for a corresponding target virtual memory region based on an address of the mapping establishment request in response to receiving the mapping establishment request, determine a target backend based on the target virtual memory region, and determine a corresponding physical page type based on the target backend.

In some optional embodiments, after an allocated virtual memory region (Vregion) is bound to a target backend instance, physical page allocation may be passively performed. For example, when a page fault is detected, the operating system may search for a corresponding target virtual memory region (Vregion) based on a page fault address, and step 302 is performed.

In some optional embodiments, in a page fault scenario, the operating system may alternatively determine validity of current access to a virtual memory address. For example,
if it is determined that the current access to the virtual memory address is invalid access, exception page fault processing may be performed. For a specific manner of exception page fault processing, refer to the conventional technology. Details are not described in embodiments of this application. Alternatively,
if it is determined that the current access to the virtual memory address is valid access, normal page fault processing may be performed, and step 302 is performed.

Step 302: The operating system determines whether the virtual memory region (Vregion) is mapped to a huge physical page.

Specifically, after determining the target virtual memory region (Vregion), the operating system may obtain the target backend instance bound to the target virtual memory region (Vregion).

Then, whether to map to the huge physical page may be determined based on the target backend instance.

In some optional embodiments, the backend instance may determine, based on a type of the backend instance, to map to a common physical page, and step 303 is performed.

In some optional embodiments, the backend instance may determine, based on a type of the backend instance, to map to the huge physical page, and step 305 is performed.

It may be understood that a page granularity of the huge physical page is greater than a page granularity of the common physical page. For example, the page granularity of the common physical page may be 4 K, and the page granularity of the huge physical page may be 16 K, 32 K, 64 K, 128 K, 2 M, 1 G, or the like. It may be understood that the foregoing values are merely examples for description, and may be specifically set based on an actual situation. This is not specifically limited in embodiments of this application.

In some optional embodiments, whether to map to the huge physical page may alternatively be determined according to a preset algorithm. A specific algorithm may be as follows. A backend instance may obtain a huge-page window. The huge-page window indicates a memory space that can be accommodated by the huge physical page. For example, a page granularity of the huge physical page is 64 K, and a size of the huge-page window is 64 K.

Then, an intersection set between the huge-page window and the target virtual memory region (Vregion) is calculated, and whether to map to the huge page is determined based on the intersection set.

If the operating system determines to map to a common physical page, step 303 is performed. Alternatively,
if the operating system determines to map to the huge physical page, step 305 is performed.

A page fault scenario in which the page granularity of the common physical page is 4 K and the page granularity of the huge physical page is 64 K is used as an example for description.

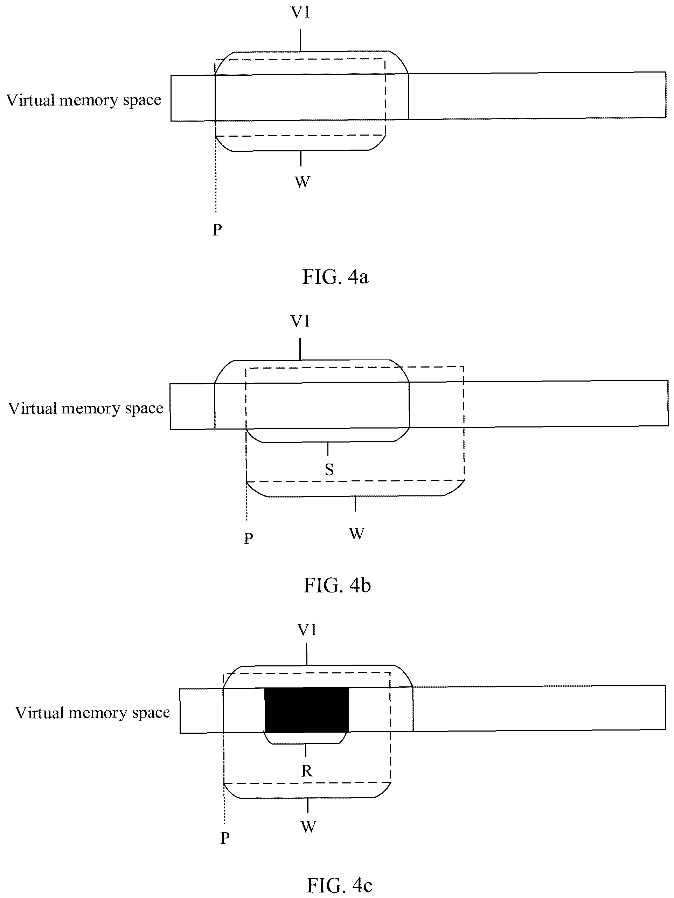

FIG. 4a shows a page fault scenario. Refer to FIG. 4a. V1 is a virtual memory region (Vregion) corresponding to a page fault address, and P is the page fault address. W is a huge-page window, that is, a size of W is 64 K. Because V1 is larger than W, an intersection set between V1 and W is W. Then, the operating system may determine a page granularity of the intersection set as a page granularity of a current to-be-allocated physical page, that is, use a page granularity of W as the page granularity of the current to-be-allocated physical page, for example, 64 K. The operating system may determine, based on the page granularity of the to-be-allocated physical page, that a virtual memory region (Vregion) corresponding to W is mapped to the huge physical page.

It may be understood that, before the intersection set between V1 and W is calculated, the huge-page windows may be further aligned. The huge-page windows are aligned in the following two manners.

Manner 1: Offset based on a virtual memory region (Vregion).

For a backend without a data source type, for example, an anonymity-class backend, the page fault address may be offset in the virtual memory region (Vregion), and then the huge-page window may be aligned with an offset page fault address.

Manner 2: Offset based on a backend.

For a backend with a data source type, for example, a file-class backend or a device-class backend, the page fault address may be offset in the backend. For example, the page fault address may be converted into an address in the backend (for example, an offset location in a file), and then the converted address is offset, so that the huge-page window is aligned with an offset address.

For a manner of determining whether the page fault address needs to be offset, refer to the conventional technology. Details are not described in embodiments of this application.

FIG. 4b shows another page fault scenario. Refer to FIG. 4b. V1 is a virtual memory region (Vregion) corresponding to a page fault address, and P is the page fault address. W is a huge-page window, that is, a size of W is 64 K. An intersection set between V1 and W is S. Because a huge-page part other than S in W causes a waste, the operating system may use the page granularity of the common page as a page granularity of a current to-be-allocated physical page, for example, 4 K. The operating system may determine, based on the page granularity of the to-be-allocated physical page, that a virtual memory region (Vregion) corresponding to S is mapped to the common physical page.

FIG. 4c shows still another page fault scenario. Refer to FIG. 4c. V1 is a virtual memory region (Vregion) corresponding to a page fault address, R is an occupied virtual address, that is, R is a virtual address mapped to an existing physical page, and P is the page fault address. W is a huge-page window, that is, a size of W is 64 K. S is an intersection set between V1 and W. Because V1 is larger than W, S is W. However, W includes the occupied virtual address R, that is, S includes a physical page that cannot be allocated. Therefore, the operating system may use the page granularity of the common page as a page granularity of a current to-be-allocated physical page, for example, 4 K. The operating system may determine, based on the page granularity of the to-be-allocated physical page, that a virtual memory region (Vregion) corresponding to S is mapped to the common physical page.

It may be understood that a page granularity decision algorithm is not limited to a type in the foregoing example.

Different backend instances have different page granularity decision algorithms. This is not limited in embodiments of this application.

Step 303: The operating system allocates or loads the common physical page.

Specifically, if the operating system determines to map to the common physical page, the operating system may allocate or load the common physical page. For example, the common physical page may be a 4 K physical page, but this does not constitute a limitation on embodiments of this application. The common physical page may also be a physical page with another granularity.

In some optional embodiments, if the operating system successfully allocates or loads the common physical page, step 304 is performed. Alternatively,
if the operating system fails to allocate or load the common physical page, the operating system may reclaim the allocated common physical page or the loaded common physical page, and reallocate or reload a common physical page; or the operating system enters an exception handling procedure. For a specific processing manner of the exception handling procedure, refer to the conventional technology. Details are not described herein again.

Step 304: The operating system establishes a first mapping relationship between the target virtual memory region (Vregion) and the common physical page.

Specifically, the operating system may establish the first mapping relationship between the target virtual memory region (Vregion) and the common physical page, namely, a mapping relationship between a virtual address and a physical address, so that allocation or loading of the common physical page and mapping establishment can be completed.

Step 305: The operating system allocates or loads the huge physical page.

Specifically, if the operating system determines to map to the huge physical page, the operating system may allocate or load the huge physical page. For example, the huge physical page may be a 64 K physical page, but this does not constitute a limitation on embodiments of this application.

In some optional embodiments, if the operating system successfully allocates or loads the huge physical page, step 306 is performed. Alternatively,
if the operating system fails to allocate or load the huge physical page, the operating system may reclaim the allocated huge physical page or the loaded huge physical page, and reallocate or reload a huge physical page; or the operating system may perform defragmentation, and reallocate or reload a huge physical page after defragmentation succeeds; or the operating system changes to allocate or load the common physical page. For a specific manner of allocating or loading the common physical page, refer to related descriptions in the foregoing embodiment. Details are not described herein again.

Step 306: The operating system establishes a first mapping relationship between the target virtual memory region (Vregion) and the huge physical page.

Specifically, the operating system may establish the first mapping relationship between the target virtual memory region (Vregion) and the huge physical page, namely, a mapping relationship between a virtual address and a physical address, so that allocation or loading of the huge physical page and mapping establishment can be completed.

In some optional embodiments, the huge physical page may further support hybrid mapping. For example, the huge physical page may be full mapped, that is, the virtual memory region (Vregion) is mapped to the entire huge physical page based on a preset mapping granularity. The preset mapping granularity may be the page granularity of the common physical page, for example, 4 K. For example, the preset mapping granularity is 4 K, and the page granularity of the huge physical page is 64 K. After mapping between the virtual memory region (Vregion) and the entire huge physical page is completed through 16 times of mapping, a reference count of the physical page is increased by 1. In other words, accumulation of the physical page is based on the page granularity of the huge physical page.

Alternatively, the huge physical page may be partially mapped, that is, the virtual memory region (Vregion) is mapped to a partial area in the huge physical page based on a preset mapping granularity. For example, the page granularity is 4 K, and the virtual memory region (Vregion) may be mapped to a partial area in a 64 K huge page based on a granularity of 4 K. It is assumed that the virtual memory region (Vregion) is 8 K. In this way, partial mapping between the virtual memory region (Vregion) and the huge physical page may be completed through two times of mapping, and the virtual memory region (Vregion) is mapped to only an area of a size of 8 K in the huge physical page. It may be understood that each time mapping is completed based on the preset mapping granularity, a reference count of the physical page is increased by 1. In other words, accumulation of the physical page is based on the preset mapping granularity.

In the foregoing descriptions, by using FIG. 3, an example of allocating or loading the physical memory and establishing the mapping relationship between the virtual memory and the physical memory is described. In a process of using the application, the application may further invoke a system interface to update related information, the first mapping relationship, and physical page information of the virtual memory region (Vregion). Next, the following describes, by using FIG. 4, an example of updating the related information, the first mapping relationship, and the physical page information of the virtual memory region (Vregion).

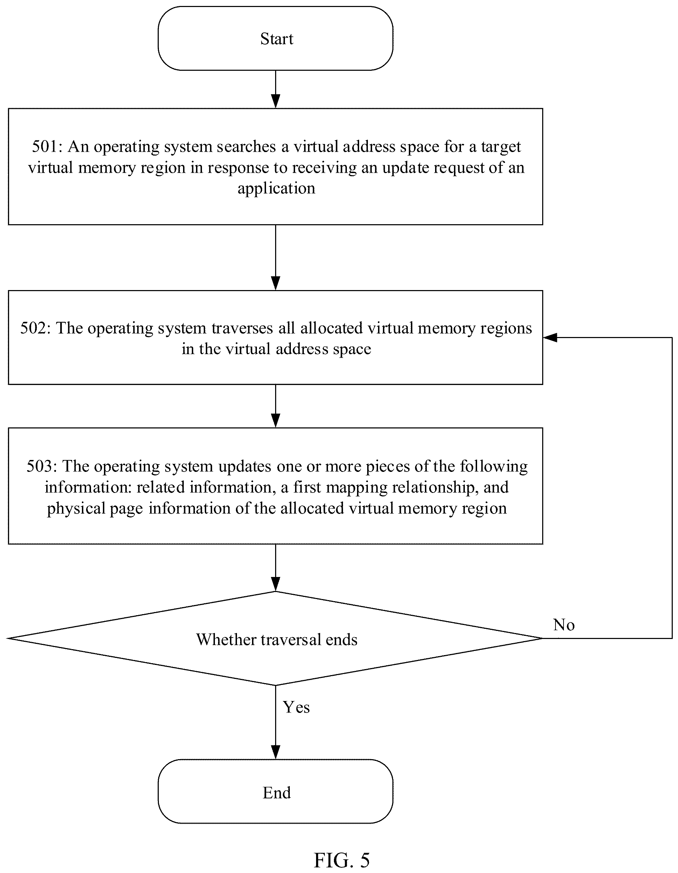

FIG. 5 is a schematic flowchart of still another embodiment of the memory management method according to this application. The method specifically includes the following steps.

Step 501: An operating system searches a virtual address space (Vspace) for a target virtual memory region (Vregion) in response to receiving an update request of an application.

Specifically, the application may initiate the update request, to update one or more pieces of the following information: related information, a first mapping relationship, and physical page information of the virtual memory region (Vregion).

In response to receiving the update request of the application, the operating system may determine a corresponding target virtual address space (Vspace) based on the update request, and then may search the target virtual address space (Vspace) for the target virtual memory region (Vregion).

Step 502: The operating system traverses all allocated virtual memory regions (Vregions) in the virtual address space (Vspace).

Specifically, in a traversal process, when any allocated virtual memory region (Vregion) is traversed, one or more pieces of the following information: related information, a first mapping relationship, and physical page information of the allocated virtual memory region (Vregion) may be updated, and step 403 is performed until all the allocated virtual memory regions (Vregions) in the target virtual address space (Vspace) are traversed.

In some optional embodiments, when any allocated virtual memory region (Vregion) is traversed, validity of an update request for the allocated virtual memory region (Vregion) may alternatively be determined.

For example, if it is determined that the current update request for the allocated virtual memory region (Vregion) is a valid update request, one or more pieces of the following information: related information, a first mapping relationship, and physical page information of the allocated virtual memory region (Vregion) may be updated. Alternatively,
if it is determined that the current update request for the allocated virtual memory region (Vregion) is an invalid update request, exception update processing may be performed. For a specific manner of the exception update processing, refer to the conventional technology. Details are not described in embodiments of this application.

Step 503: The operating system updates one or more pieces of the following information: related information, a first mapping relationship, and physical page information of the allocated virtual memory region (Vregion).

Specifically, when related information of any allocated virtual memory region (Vregion) is updated, a first mapping relationship may be correspondingly updated, all physical pages to which the allocated virtual memory region (Vregion) is mapped may be traversed, and information about all the physical pages to which the allocated virtual memory region (Vregion) is mapped may be updated.

It may be understood that, when the information about all the physical pages is updated, after a current physical page is updated, a next physical page may be updated until all the physical pages in the current allocated virtual memory region (Vregion) are updated.

It may be understood that, after all the physical pages to which the current allocated virtual memory region (Vregion) is mapped are traversed, and one or more pieces of the following information: the related information, the first mapping relationship, and the physical page information of the allocated virtual memory region (Vregion) are updated, it may be considered that update of the current allocated virtual memory region (Vregion) is completed, and update of a next allocated virtual memory region (Vregion) may be performed.

When any physical page is updated, a page type of the physical page may be determined. The page type includes a common-page type and a huge-page type. The common-page type indicates that a current physical page is a common physical page, and the huge-page type indicates that a current physical page is a huge physical page.

If the current physical page is the common physical page, the operating system may update page information in the common physical page. For example, the page information may include information such as physical address information and a second mapping relationship. However, this does not constitute a limitation on embodiments of this application. In some embodiments, the page information may further include other information. The second mapping relationship may be considered as a reverse mapping relationship corresponding to the first mapping relationship, and the second mapping relationship is a mapping relationship between one physical address and one or more virtual memories. It may be understood that, a corresponding physical memory may be accessed by a virtual memory region (Vregion) based on the first mapping relationship, and contrary to the first mapping relationship, a corresponding virtual memory region (Vregion) may be found based on the second mapping relationship by using a current physical address.

If the current physical page is the huge physical page, the operating system may determine a valid mapping area of the huge physical page. For example, if the virtual memory region (Vregion) is mapped to the entire huge physical page, the valid mapping area is the entire huge physical page; or if the virtual memory region (Vregion) is mapped to a partial area in the huge physical page, the valid mapping area is the partial area in the huge physical page.

Then, the operating system may update page information corresponding to the valid mapping area based on the determined valid mapping area.

In some optional embodiments, after a current huge physical page is updated, it may be further determined whether a virtual memory region (Vregion) corresponding to the current huge physical page needs to be split. For example, when the update request is used for updating a partial area in one huge physical page, updated information such as an access permission of the partial area is inconsistent with that of another area in the physical page. In this case, a virtual memory region (Vregion) of the huge physical page may be split, to obtain a plurality of virtual memory regions (Vregions), and mapping information between the plurality of virtual memory regions (Vregions) and physical pages may be created.

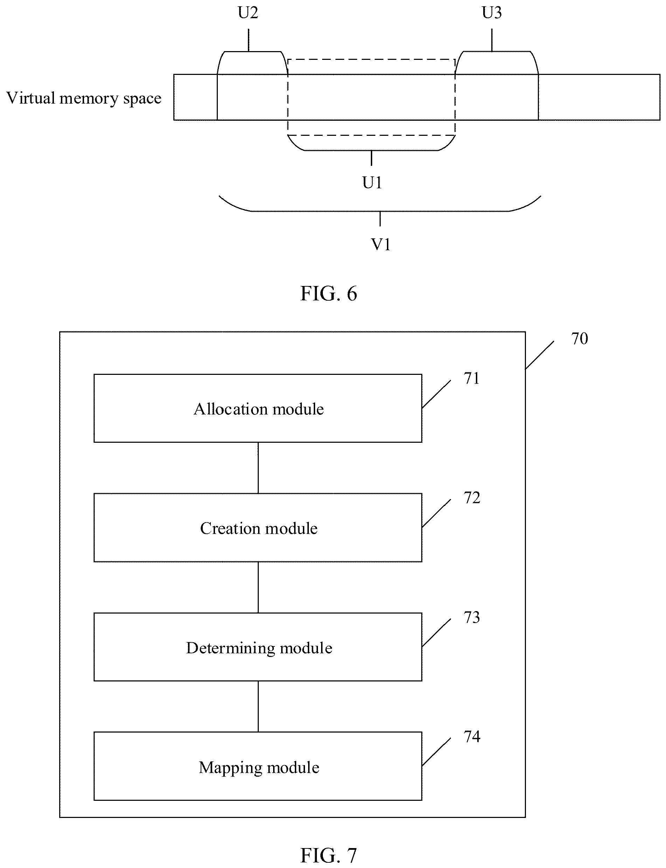

FIG. 6 is a diagram of effect of splitting one virtual memory region (Vregion) into a plurality of virtual memory regions (Vregions). Refer to FIG. 6. V1 is an allocated virtual memory region (Vregion), V1 is mapped to a huge physical page, U 1 is an area to be updated based on an update request, and U2 and U3 are areas other than U1 in V1. It can be learned that the area to be updated based on the update request is a partial area in the huge physical page. After U1 is updated, information such as an access permission of U1 may be inconsistent with that of U2 and U3. In this case, V1 may be split into three virtual memory regions (Vregions): U1, U2, and U3. Because the three virtual memory regions (Vregions) are all insufficient to be mapped to one huge physical page, the three virtual memory regions (Vregions) may be separately mapped to a common physical page.

An example in which update of related information of a virtual memory region (Vregion) is to reclaim a physical page is used for description. For example, when detecting that memory resources are insufficient, the operating system may reclaim an allocated physical page or a loaded physical page, to reclaim a physical memory. It may be understood that, in addition to detecting that the memory resources are insufficient, triggering of reclaiming the physical page may further include another scenario. For example, the application may actively release a physical memory, to reclaim the physical memory. Alternatively, as described above, when the operating system fails to allocate or load a physical page (including a common physical page or a huge physical page), the operating system may reclaim an allocated physical page or a loaded physical page. This is not specifically limited in embodiments of this application.

It may be understood that when any one of the foregoing scenarios occurs, the operating system may initiate a reclamation request, to reclaim the allocated physical page or the loaded physical page. In addition, after determining a to-be-reclaimed physical page, the operating system may search, based on a second mapping relationship, for a virtual memory region (Vregion) corresponding to the to-be-reclaimed physical page.

If the current to-be-reclaimed physical page is the common physical page, mapping between the virtual memory region (Vregion) and the to-be-reclaimed common physical page may be removed, and a reference count of the to-be-reclaimed common physical page and the second mapping relationship may be updated. Alternatively,
if the current to-be-reclaimed physical page is the huge physical page, a mapping area of the virtual memory region (Vregion) in the to-be-reclaimed huge physical page may be calculated, a first mapping relationship between the mapping area and the virtual memory region (Vregion) may be removed based on the mapping area, and a reference count of the to-be-reclaimed huge physical page and the second mapping relationship may be updated.

For example, the virtual memory region corresponding to the to-be-reclaimed huge physical page may be found based on the second mapping relationship, and then a first mapping relationship between the virtual memory region corresponding to the to-be-reclaimed physical page and the to-be-reclaimed physical page may be removed.

A manner of updating the reference count of the huge physical page may be determined based on whether an updated huge physical page supports hybrid mapping. For a specific implementation of the reference count of the huge physical page, refer to related descriptions in the foregoing embodiment. Details are not described herein again.

FIG. 7 is a diagram of a structure of an embodiment of a memory management apparatus according to this application. As shown in FIG. 7, the memory management apparatus 70 may include: an allocation module 71, a creation module 72, a determining module 73, and a mapping module 74.

The allocation module 71 is configured to allocate a virtual memory in response to a received memory allocation request.

The creation module 72 is configured to: create a virtual memory region for the allocated virtual memory, and bind the virtual memory region with a target backend, where the backend indicates a type of a data source.

The determining module 73 is configured to determine a physical page type based on the target backend, where the physical page type includes a common-physical-page type and a huge-physical-page type.

The mapping module 74 is configured to: allocate or load a physical page based on the physical page type, and establish a first mapping relationship between the virtual memory region and the allocated physical page or the loaded physical page.

In a possible implementation, the determining module 73 is further configured to: search for a corresponding target virtual memory region based on a page fault address in response to detecting a page fault; and determine the target backend based on the target virtual memory region.

In a possible implementation, the determining module 73 is further configured to: search for a corresponding target virtual memory region based on an address of a mapping establishment request in response to receiving the mapping establishment request; and determine the target backend based on the target virtual memory region.

In a possible implementation, the determining module 73 is further configured to: determine a target intersection set between a huge-page window and a target virtual memory region, where the huge-page window indicates a memory space that can be accommodated by a huge physical page; and
if the target intersection set is equal to the memory space corresponding to the huge physical page, determine that the physical page type is the huge-physical-page type;
if the target intersection set is less than the memory space corresponding to the huge physical page, determine that the physical page type is the common-physical-page type; or
if the target intersection set includes the allocated physical page or the loaded physical page, determine that the physical page type is the common-physical-page type.

In a possible implementation, the memory management apparatus 70 further includes:
an updating module, configured to update one or more pieces of the following information: related information, the first mapping relationship, and physical page information of the target virtual memory region in response to a received update request.

In a possible implementation, the allocated physical page or the loaded physical page is the huge physical page.

In a possible implementation, the mapping module 74 is further configured to: map the target virtual memory region to a partial area in the allocated physical page or a partial area in the loaded physical page; or
map the target virtual memory region to an entire area in the allocated physical page or an entire area in the loaded physical page.

In a possible implementation, the memory management apparatus 70 further includes:
a removing module, configured to: in response to detecting a reclamation request, select a reclaimable physical page from the allocated physical page or the loaded physical page, and remove a first mapping relationship between the virtual memory region and the reclaimable physical page, where
the reclaimable physical page is a common physical page or a huge physical page.

In a possible implementation, the reclaimable physical page is the huge physical page, and the virtual memory region is mapped to a partial area in the reclaimable physical page, or the virtual memory region is mapped to all areas in the reclaimable physical page.

In a possible implementation, the reclaimable physical page is the huge physical page. The removing module is further configured to: find a virtual memory region corresponding to the reclaimable physical page based on a second mapping relationship, where the second mapping relationship is a mapping relationship between one physical page and one or more virtual memory regions; and
remove a first mapping relationship between the virtual memory region corresponding to the reclaimable physical page and the reclaimable physical page.

The memory management apparatus 70 provided in the embodiment shown in FIG. 7 may be configured to perform the technical solution in the method embodiment in this application. For an implementation principle and technical effect of the memory management apparatus, further refer to related descriptions in the method embodiment.

It should be understood that division of the modules of the memory management apparatus 70 shown in FIG. 7 is merely logical function division. During actual implementation, all or some of the modules may be integrated into one physical entity, or the modules may be physically separated. In addition, all of the modules may be implemented in a form of software invoked by a processing element, or may be implemented in a form of hardware. Alternatively, some modules may be implemented in a form of software invoked by a processing element, and some modules are implemented in a form of hardware. For example, a detection module may be a separately disposed processing element, or may be integrated into a chip of an electronic device for implementation. Implementation of other modules is similar to the implementation of the detection module. In addition, all or some of the modules may be integrated together, or may be implemented independently. In an implementation process, steps in the foregoing methods or the foregoing modules can be implemented by using a hardware integrated logic circuit in the processor element, or by using instructions in a form of software.

For example, the foregoing modules may be one or more integrated circuits configured to implement the foregoing method, for example, one or more application-specific integrated circuits (Application-Specific Integrated Circuits, ASICs for short below), one or more microprocessors (Digital Signal Processors, DSPs for short below), or one or more field programmable gate arrays (Field Programmable Gate Arrays, FPGAs for short below). For another example, the modules may be integrated together and implemented in a form of system-on-a-chip (System-On-a-Chip, SOC for short below).

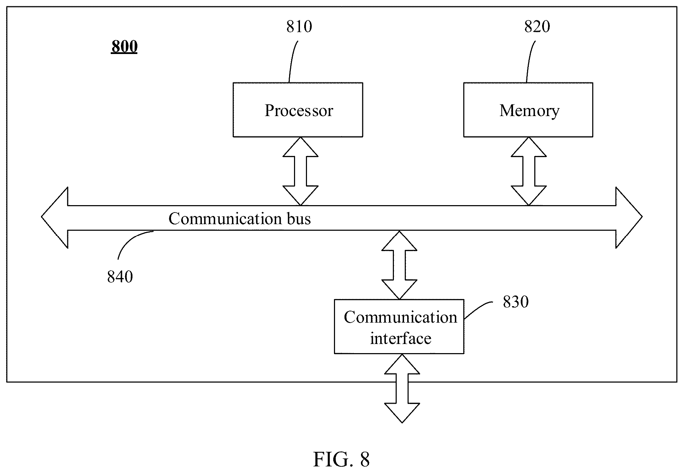

With reference to FIG. 8, the following further describes an example electronic device provided in embodiments of this application. FIG. 8 is a diagram of a structure of the electronic device 800.

The electronic device 800 may include at least one processor and at least one memory communicatively connected to the processor. The memory stores program instructions that can be executed by the processor, and the processor can invoke the program instructions to perform the method provided in embodiments of this application.

FIG. 8 is a block diagram of the example electronic device 800 applicable to implementing an implementation of this application. The electronic device 800 shown in FIG. 8 is merely an example, and should not impose any limitation on a function and a usage scope of embodiments of this application.

As shown in FIG. 8, the electronic device 800 is presented in a form of general-purpose computing device. Components of the electronic device 800 may include but are not limited to one or more processors 810, a memory 820, a communication bus 840 that connects different system components (including the memory 820 and the processor 810), and a communication interface 830.

The communication bus 840 indicates one or more of several types of bus structures, and includes a memory bus or a memory controller, a peripheral bus, a graphics acceleration port, a processor, or a local bus that uses any one of a plurality of bus structures. For example, these architectures include but are not limited to an industry standard architecture (Industry Standard Architecture, ISA for short below) bus, a micro channel architecture (Micro Channel Architecture, MAC for short below) bus, an enhanced ISA bus, a video electronics standards association (Video Electronics Standards Association, VESA for short below) local bus, and a peripheral component interconnection (Peripheral Component Interconnection, PCI for short below) bus.

The electronic device 800 typically includes a plurality of computer system-readable media. Each of the media may be any available medium that can be accessed by the electronic device, and available media include volatile and non-volatile media, and removable and non-removable media.

The memory 820 may include a computer system-readable medium in a form of volatile memory, for example, a random access memory (Random Access Memory, RAM for short below) and/or a cache. The electronic device may further include another removable/non-removable volatile/non-volatile computer system storage medium. Although not shown in FIG. 8, a magnetic disk drive configured to read data from and write data to a removable non-volatile magnetic disk (for example, a "floppy disk") may be provided, and an optical disc drive configured to read data from and write data to a removable non-volatile optical disc (for example, a compact disc read-only memory (Compact Disc Read-Only Memory, CD-ROM for short below), a digital video disc read-only memory (Digital Video Disc Read-Only Memory, DVD-ROM for short below), or another optical medium) may be provided. In these cases, each drive may be connected to the communication bus 840 through one or more data medium interfaces. The memory 820 may include at least one program product, the program product includes a set of (for example, at least one) program modules, and these program modules are configured to perform functions in embodiments of this application.

A program/utility including a set of (at least one) program modules may be stored in the memory 820. Such a program module includes but is not limited to an operating system, one or more applications, another program module, and program data. Each of or a specific combination of these examples may include implementation of a network environment. The program module usually performs a function and/or a method in embodiments of this application.

The electronic device 800 may also communicate with one or more external devices (for example, a keyboard, a pointing device, or a display), or may communicate with one or more devices that enable a user to interact with the electronic device, and/or communicate with any device (for example, a network card or a modem) that enables the electronic device to communicate with one or more other computing devices. Such communication may be performed by using the communication interface 830. In addition, the electronic device 800 may further communicate with one or more networks (for example, a local area network (Local Area Network, LAN for short below), a wide area network (Wide Area Network, WAN for short below), and/or a public network, such as the Internet) by using a network adapter (not shown in FIG. 8), and the network adapter may communicate with another module of the electronic device by using the communication bus 840. It should be understood that, although not shown in FIG. 8, other hardware and/or software modules may be used in combination with the electronic device 800, including but not limited to: microcode, a device driver, a redundancy processing unit, an external magnetic disk drive array, a redundant arrays of independent drives (Redundant Arrays of Independent Drives, RAID for short below) system, a magnetic tape driver, a data backup storage system, and the like.

The processor 810 runs the program stored in the memory 820, to perform various function applications and data processing, for example, implement the method provided in embodiments of this application.

It may be understood that an interface connection relationship between the modules that is shown in embodiments of this application is merely an example for description, and does not constitute a limitation on the structure of the electronic device 800. In some other embodiments of this application, the electronic device 800 may alternatively use an interface connection manner different from that in the foregoing embodiment, or use a combination of a plurality of interface connection manners.

In the foregoing embodiments, the processor may include, for example, a CPU, a DSP, a microcontroller, or a digital signal processor, and may further include a GPU, an embedded neural-network processing unit (Neural-network Processing Unit, NPU for short below), and an image signal processor (Image Signal Processor, ISP for short below). The processors may further include a necessary hardware accelerator or logic processing hardware circuit, for example, an ASIC, or one or more integrated circuits configured to control program execution of the technical solutions of this application. In addition, the processor may have a function of operating one or more software programs, and the software programs may be stored in a storage medium.

Embodiments of this application further provide a computer-readable storage medium. The computer-readable storage medium stores a computer program. When the computer program is run on a computer, the computer is enabled to perform the method provided in embodiments of this application.

Embodiments of this application further provide a computer program product. The computer program product includes a computer program. When the computer program is run on a computer, the computer is enabled to perform the method provided in embodiments of this application.

In embodiments of this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by a combination of electronic hardware, computer software, and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of software functional unit and sold or used as an independent product, the function may be stored in a computer-readable storage medium. Based on such an understanding, the technical solutions of this application essentially, or a part contributing to the conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (Read-Only Memory, ROM for short below), a random access memory (Random Access Memory, RAM for short below), a magnetic disk, or an optical disc.

The foregoing descriptions are merely specific implementations of embodiments of this application. Any variation or replacement readily figured out by a person skilled in the art within the technical scope disclosed in this application shall fall within the protection scope in embodiments of this application. Therefore, the protection scope of this application shall be subject to the protection scope of the claims.

## Claims

1. A memory management method, wherein the method comprises:
allocating a virtual memory in response to a received memory allocation request;
creating a virtual memory region for the allocated virtual memory, and binding the virtual memory region to a target backend, wherein the backend indicates a type of a data source;
determining a physical page type based on the target backend, wherein the physical page type comprises a common-physical-page type and a huge-physical-page type; and
allocating or loading a physical page based on the physical page type, and establishing a first mapping relationship between the virtual memory region and the allocated physical page or the loaded physical page.

2. The method according to claim 1, wherein after the binding the virtual memory region to a target backend, the method further comprises:
searching for a corresponding target virtual memory region based on a page fault address in response to detecting a page fault; and
determining the target backend based on the target virtual memory region.

3. The method according to claim 1, wherein after the binding the virtual memory region to a target backend, the method further comprises:
searching for a corresponding target virtual memory region based on an address of a mapping establishment request in response to receiving the mapping establishment request; and determining the target backend based on the target virtual memory region.

4. The method according to claim 1, wherein the determining a physical page type based on the target backend comprises:
determining a target intersection set between a huge-page window and the target virtual memory region, wherein the huge-page window indicates a memory space that can be accommodated by a huge physical page; and
if the target intersection set is equal to the memory space corresponding to the huge physical page, determining that the physical page type is the huge-physical-page type;
if the target intersection set is less than the memory space corresponding to the huge physical page, determining that the physical page type is the common-physical-page type; or
if the target intersection set comprises the allocated physical page or the loaded physical page, determining that the physical page type is the common-physical-page type.

5. The method according to any one of claims 1 to 4, wherein after the allocating or loading a physical page based on the physical page type, and establishing a first mapping relationship between the target virtual memory region and the allocated physical page or the loaded physical page, the method further comprises:
updating one or more pieces of the following information: related information, the first mapping relationship, and physical page information of the target virtual memory region in response to a received update request.

6. The method according to any one of claims 1 to 5, wherein the allocated physical page or the loaded physical page is the huge physical page, and the establishing a first mapping relationship between the target virtual memory region and the allocated physical page or the loaded physical page comprises:
mapping the target virtual memory region to a partial area in the allocated physical page or a partial area in the loaded physical page; or
mapping the target virtual memory region to an entire area in the allocated physical page or an entire area in the loaded physical page.

7. The method according to claim 1, wherein after the allocating or loading a physical page based on the physical page type, and establishing a first mapping relationship between the target virtual memory region and the allocated physical page or the loaded physical page, the method further comprises:
in response to detecting a reclamation request, selecting a reclaimable physical page from the allocated physical page or the loaded physical page, and removing a first mapping relationship between the virtual memory region and the reclaimable physical page, wherein
the reclaimable physical page is a common physical page or a huge physical page.

8. The method according to claim 7, wherein the reclaimable physical page is the huge physical page, and the virtual memory region is mapped to a partial area in the reclaimable physical page, or the virtual memory region is mapped to all areas in the reclaimable physical page.

9. The method according to claim 7, wherein the reclaimable physical page is the huge physical page, and the removing a first mapping relationship between the virtual memory region and the reclaimable physical page comprises:
finding a virtual memory region corresponding to the reclaimable physical page based on a second mapping relationship, wherein the second mapping relationship is a mapping relationship between one physical page and one or more virtual memory regions; and
removing a first mapping relationship between the virtual memory region corresponding to the reclaimable physical page and the reclaimable physical page.

10. An electronic device, comprising a processor and a memory, wherein the memory is configured to store a computer program, and the processor is configured to run the computer program to implement the method according to any one of claims 1 to 9.

11. A computer-readable storage medium, wherein the computer-readable storage medium stores a computer program, and when the computer program is run on a computer, the method according to any one of claims 1 to 9 is implemented.
